# EUROPEAN PATENT SPECIFICATION

(11) **EP 2 482 550 B1**
(45) Date of publication and mention of the grant of the patent: **06.03.2019**
(21) Application number: 10819000.0
(22) Date of filing: 16.09.2010
(51) Int. Cl.: H04N 21/434, H04N 21/435, H04N 21/462, H04N 21/81, H04N 21/858

(54) **METHOD AND DEVICE FOR RECEIVING AN EXPANDED SERVICE/PROGRAM GUIDE**
VERFAHREN UND VORRICHTUNG ZUM ABRUFEN EINES ERWEITERTEN DIENST-/PROGRAMMFÜHRERS
PROCÉDÉ ET DISPOSITIF DE RÉCEPTION D'UN GUIDE ÉTENDU DES SERVICES / PROGRAMMES

(30) Priority: 25.09.2009 US 245667 P
(43) Date of publication of application: 01.08.2012
(73) Proprietor: LG Electronics Inc., Seoul 150-721 (KR)
(72) Inventor: LEE, Ho Min, Seoul 137-724 (KR); KIM, Jin Pil, Seoul 137-724 (KR); CHOI, Jong Sung, Seoul 137-724 (KR); HONG, Ho Taek, Seoul 137-724 (KR)
(74) Representative: Katérle, Axel
(86) International application number: PCT/KR2010/006336
(87) International publication number: WO 2011/037359

(56) References cited:
- EP-A1- 1 732 326
- WO-A1-2006/077882
- WO-A1-2010/029743
- KR-A- 20080 060 778
- KR-A- 20090 012 292
- US-A1- 2007 192 793
- US-B1- 6 792 618
- "Digital Video Broadcasting (DVB); Guidelines on implementation and usage of Service Information (SI)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.9.1, 1 June 2009 (2009-06-01), XP014044415,

## Description

### Technical Field

The present invention relates to additional service reception of a digital TV, and more particularly to a method and device for receiving an expanded service/program guide in digital broadcasting.

### Background Art

The digital convergence has spread rapidly. In particular, the convergence of broadcasting and communications is rapidly in progress due to diversification of broadcast contents and stable construction of communication infra.

As a method for providing a TV service through broadcasting and communications, a method for providing a broadcast program and an Internet service individually has been adopted. Accordingly, since a user of a TV should acquire each of the broadcast program and the Internet service, there is inconvenience in acquiring broadcasting and communications individually.

Meanwhile, a service/program guide adopted in digital broadcasting provides additional information on broadcast services. The digital TV provides a service/program guide service such as contents of brief story together with broadcast time, genre, and viewing level in a text format by using an event information table (EIT) and/or an extended text table (ETT). This service has a problem in that it does not provide a schedule of a sufficient time period due to the limitation in broadcast bandwidth or transmits only a broadcast schedule of a channel currently selected by a user without transmitting a schedule of the other broadcast station.

US 2007/192793 A1 discloses an apparatus for using an electronic programming guide (EPG) to manage broadcast content. The apparatus includes a storing unit which stores broadcast content and EPG information, a configuring unit which configures an EPG screen including information on past, current, and future broadcast content using the EPG information, and a control unit which collectively manages broadcast content provided on the EPG screen based on a user input signal.

US 6792618 B1 discloses a method of providing for viewer-customized display of a TV program. A uniform resource locator (URL) identifying a website is transmitted with the TV signal. The display of the TV program is modified to the needs of a given viewer using information obtained by processing the URL and a program characteristic selectionmade by the viewer.

EP 1732326 A1 discloses a method for providing an interactive digital broadcasting service in a mobile communication terminal for receiving digital broadcasting. Digital broadcasting signals including URL information of the digital broadcasting are received and outputted. The URL information from the received digital broadcasting signals is detected. A website of the digital broadcasting is accessed using the detected URL information when a broadcast information request for the digital broadcasting is received from a user. Broadcasting information provided from the website is displayed in a portion of a digital broadcasting output screen. Thus, while watching the digital broadcasting, users can access the Internet, retrieve information relating to broadcasting contents and state their opinion about broadcast programs.

### Disclosure

### Technical Problem

Accordingly, an object of the present invention devised to solve the conventional problems is to provide an expanded service/program guide that includes additional services for more broadcast programs. In particular, the present invention is to provide the best method for the convergence of a broadcast information reception mode through IP and a broadcast information reception mode through EIT and/or ETT.

### Technical Solution

To solve the aforementioned technical problems, an apparatus according to claim 1 is provided.

### Brief Description of the Drawings

FIG. 1 is a diagram illustrating a broadcast service system according to one embodiment of the present invention, which is a convergence system of broadcasting and Internet;
FIG. 2 is a diagram illustrating a procedure of transferring a service/program guide in a broadcast network mode in accordance with one embodiment of the present invention;
FIG. 3 is a diagram illustrating a procedure of transferring a service/program guide in a broadcast network and bidirectional network mode in accordance with one embodiment of the present invention;
FIG. 4 is a diagram illustrating a procedure of receiving a service/program guide application related to a specific service/program in accordance with one embodiment of the present invention;
FIG. 5 is a diagram illustrating detailed syntax of SDT according to one embodiment of the present invention;
FIG. 6 is a diagram illustrating detailed syntax of EIT_application_descriptor according to one embodiment of the present invention;
FIG. 7 is a diagram illustrating a procedure of obtaining information for allowing a receiver to receive an expanded service/program guide related to a specific service/program in accordance with one embodiment of the present invention;
FIG. 8 is a flow chart illustrating a procedure of receiving an expanded service/program guide application related to a specific service/program in accordance with one embodiment of the present invention;
FIG. 9 is a diagram illustrating a procedure of receiving a service/program guide for a certain time period in accordance with one embodiment of the present invention;
FIG. 10 is a diagram illustrating detailed syntax of SDT according to one embodiment of the present invention;
FIG. 11 is a diagram illustrating detailed syntax of EIT_query_descriptor added to SDT according to one embodiment of the present invention;
FIG. 12 is a flow chart illustrating a method for receiving service/program guide data for a certain time period related to a specific service/program in accordance with one embodiment of the present invention;
FIG. 13 is a diagram illustrating detailed syntax of EIT according to one embodiment of the present invention;
FIG. 14 is a diagram illustrating detailed syntax of event_schedule_location_descriptor included in the EIT according to one embodiment of the present invention;
FIG. 15 is a flow chart illustrating a method for receiving scheduling information an event related to a specific service/program in accordance with one embodiment of the present invention;
FIG. 16 is a diagram illustrating a procedure of receiving a multimedia service/program guide in accordance with one embodiment of the present invention;
FIG. 17 is a diagram illustrating detailed syntax of EIT according to one embodiment of the present invention;
FIG. 18 is a diagram illustrating detailed syntax of multimedia_event_information_descriptor according to one embodiment of the present invention;
FIG. 19 is a diagram illustrating detailed syntax of multimedia_event_information_descriptor according to another embodiment of the present invention;
FIG. 20 is a flow chart illustrating a method for providing a multimedia service/program guide in accordance with one embodiment of the present invention;
FIG. 21 is a diagram illustrating a functional block of a receiver according to one embodiment of the present invention;
FIG. 22 is a diagram illustrating a device block of a receiver according to one embodiment of the present invention;
FIG. 23 is a flow chart illustrating a method for receiving an expanded service/program guide in accordance with one embodiment of the present invention;
FIG. 24 is a flow chart illustrating a method for receiving a service/program guide in accordance with another embodiment of the present invention; and
FIG. 25 is a flow chart illustrating a method for receiving a service/program guide in accordance with other embodiment of the present invention.

### Best Mode for Carrying Out the Invention

Hereinafter, the embodiments of the present invention will be described in detail with the accompanying drawings and the disclosure disclosed in the accompanying drawings. However, it is to be understood that the present invention is not limited to the embodiments.

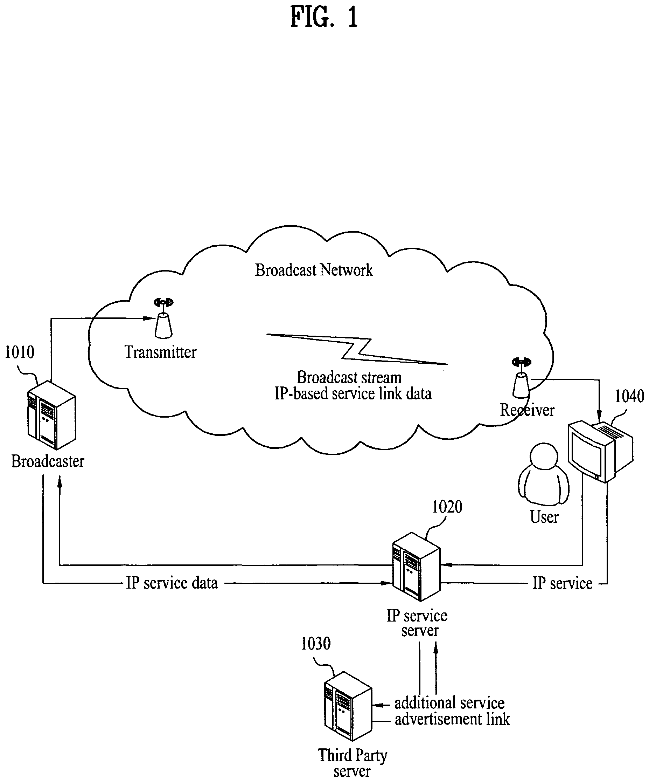

FIG. 1 is a diagram illustrating a broadcast service system according to one embodiment of the present invention, which is a convergence system of broadcasting and Internet.

Referring to FIG. 1, the broadcast service system which is the convergence system of broadcasting and Internet includes a broadcaster 1010, an IP service server 1020, a third service server 1030, and a receiver 1040.

The broadcaster 1010 transfers a broadcast program/service, which is provided in real-time, to the receiver 1040. In this case, the broadcast program/service may be transferred through broadcast networking such as terrestrial, satellite and cable. The signal transmitted through the broadcast network includes additional information required to provide a broadcast program/service as well as a broadcast program/service. For example, the signal may include signaling data or program guide.

The IP service server 1020 serves to connect the receiver 1040 with the broadcaster 1010 or the third service server 1030. Transmission of data through the IP service server 1020 is performed bidirectionally. Accordingly, this service may be referred to as a service through bidirectional network. The receiver 1040 may request the IP service server 1020 of a specific data/application. The IP service server 1020 provides non-real time video/audio contents such as application and video on demand (VoD) to the receiver 1040 through an IP network.

The third service server 1030 serves to provide a service to the IP service server 1020. For example, a contents provider may be used as the third service server 1030.

The receiver 1040 serves to provide a user with contents transmitted to the broadcast network and the bidirectional network. The user may view real-time broadcasting through the broadcast network, and may play various applications and contents by requesting and receiving them through the bidirectional network.

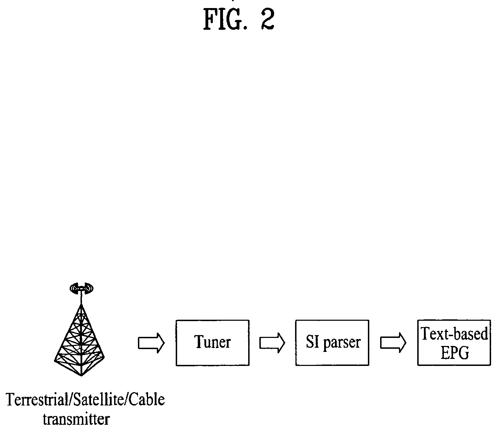

FIG. 2 is a diagram illustrating a procedure of transferring a service/program guide in a broadcast network mode in accordance with one embodiment of the present invention.

A tuner of the receiver receives a broadcast signal transmitted from the broadcaster. The receiver extracts signaling information through demodulation and decoding for the received signal. The receiver extracts a service/program guide from the extracted signaling information and provides the user with the service/program guide.

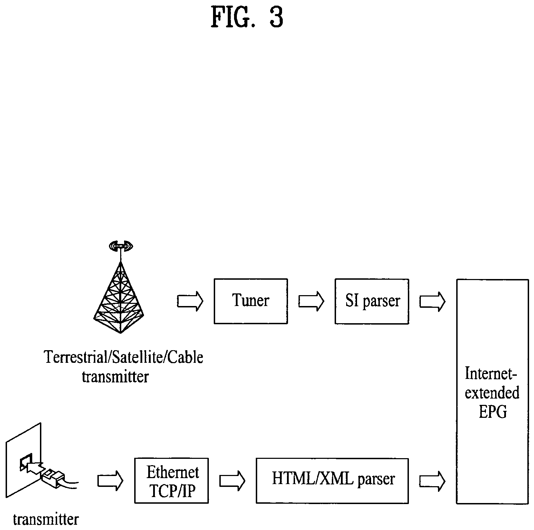

FIG. 3 is a diagram illustrating a procedure of transferring a service/program guide in a broadcast network and bidirectional network mode in accordance with one embodiment of the present invention.

Expansion information transmitted through the bidirectional network is added to the service/program guide transmitted through the broadcast network. In this case, the service/program guide transmitted through the broadcast network is transmitted in the manner described in FIG. 2, and the broadcast signal includes information connecting information used for the service/program guide with expansion information on a specific program/service provided through the bidirectional network. Alternatively, the broadcast signal includes information connecting information used for the service/program guide with expansion information on the service/program guide.

According to one embodiment, the program/service transmitted through the bidirectional network or the expansion information on the service/program guide is transmitted through TCP/IP in a format of HTML or XML. The expansion information transmitted in a format of HTML or XML does not need a parsing procedure through a signaling information parser like information transmitted in a program specific information/program and system information protocol (PSI/PSIP) mode or PSI/SI mode.

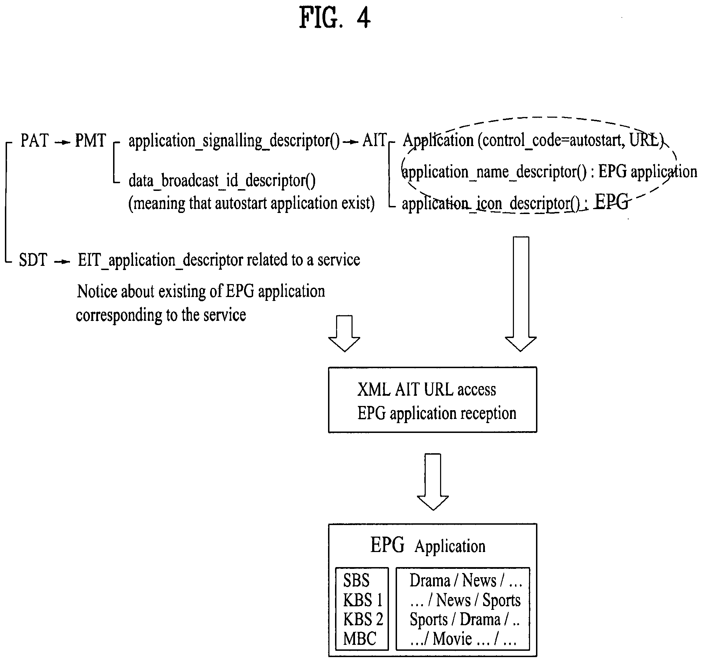

FIG. 4 is a diagram illustrating a procedure of receiving a service/program guide application related to a specific service/program in accordance with one embodiment of the present invention.

A service description table (SDT) for service/programs according to the present invention includes EIT_application_descriptor(). The receiver may determine whether an expanded service/program guide related to service/program is provided in a format of application, through the EIT_application_descriptor(). Also, if the EIT _application_descriptor() is included in the SDT, since the service/program guide application expanded from the corresponding service/program exists, the receiver may notify the user that the expanded service/program guide supported by the corresponding service/program exists, and may download the expanded service/program guide in accordance with selection of the user.

The receiver extracts a unique application_identifier() value of the expanded service/program guide application from the EIT_application_descriptor(), and extracts information for receiving an application information table (AIT) providing information on the service/program by parsing a program map table (PMT), wherein the information on the service/program supports the expanded service/program guide application. If the AIT is received using the corresponding information, the receiver may select an application having the same value as the application_identifier() value provided by the EIT_application_descriptor() from the AIT. In this case, the selected application is the expanded service/program guide application, and the receiver extracts an address (for example, URL, etc.) of a server, which provides the expanded service/program guide application, from the AIT and executes the expanded service/program guide by downloading it from the corresponding address.

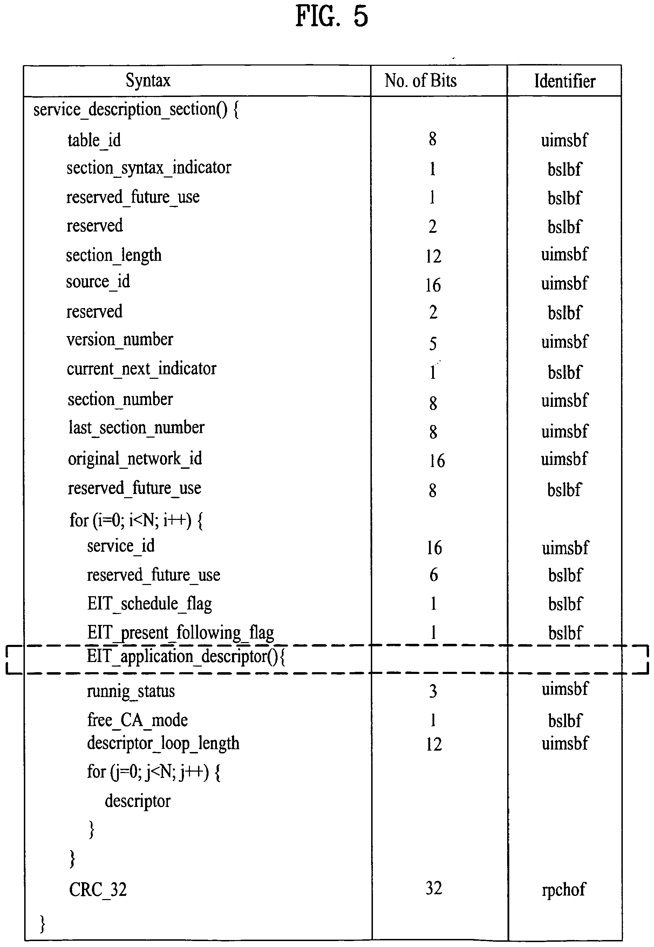

FIG. 5 is a diagram illustrating detailed syntax of SDT according to one embodiment of the present invention.

The SDT is a table that provides information on a broadcast service/program transmitted through a specific transport stream.

Table_id is a field that provides information as to that this table is the SDT, and Section_length is a field indicating a length of an SDT section. Transport_stream_id provides information for identifying a transport stream. Version_number provides version information indicating that there is any change in the SDT if there is any change in the information provided by the SDT. Current_next_indicator provides information indicating whether the SDT is currently an effective table. Section_number provides numbering information on a plurality of sections of the SDT. Last_section_number indicates a number of the last section of the SDT. In other words, it is noted how many sections exist in the SDT, through Last_section_number. Original_network_id provides information for identifying network_id in a transmission system. Service_id is a unique value for each service within the transport stream, and provides information identifying the services. Service_id corresponds to program_number of the PMT. EIT_schedule_flag indicates whether EIT (Event Information Table) schedule information for the current service exists in the current transport stream. EIT_present_following_flag provides information as to whether the EIT for services exists in the current transport stream. running_status provides information on action of event/service, such as play, stop, and finish. Free_CA_mode provides information as to whether the service transmitted through the transport stream has been scrambled. descriptors_loop_length indicates a length of a following descriptor. CRC_32 indicates a value of CRC (Cyclic Redundancy Check).

Also, the SDT further includes EIT_application_descriptor. The EIT_application_descriptor may be included in Loop for each service/program of the SDT. The EIT_application_descriptor indicates information on an application related to each service/program in the Loop for each service/program. For example, the EIT_application_descriptor may provide information on an application that provides a service/program guide expanded for each service/program. In this case, the receiver may recognize that the expanded service/program guide related to the corresponding service/program exists, through the presence of the EIT_application_descriptor. Accordingly, if the user selects a specific channel or a service/program guide menu, the receiver transfers information as to whether the expanded service/program guide application for each service/program exists, to the user, and the user may use the expanded service/program guide application for the corresponding service/program.

In this embodiment, it has been described that the EIT_application_descriptor is included in the SDT. However, the EIT_application_descriptor may be included in a virtual channel table (VCT) in accordance with a TV system where broadcasting and communications are converged.

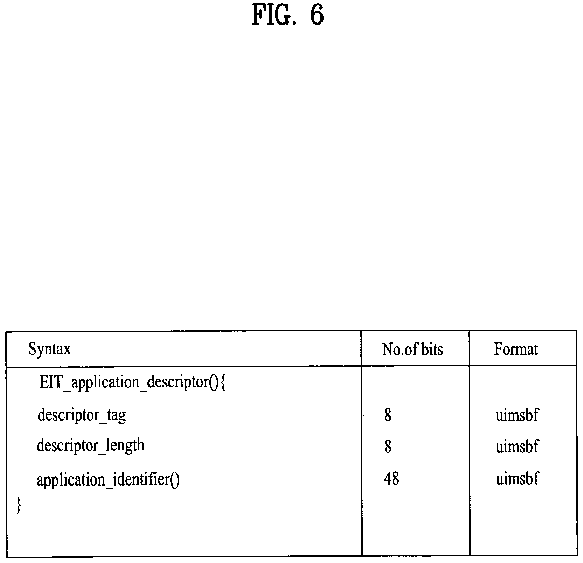

FIG. 6 is a diagram illustrating detailed syntax of EIT_application_descriptor according to one embodiment of the present invention.

The EIT_application_descriptor includes descriptor_tag, descriptor_length and application_identifier.

The descriptor_tag indicates a unique value of the descriptor, wherein the value indicates what the descriptor is. Whether what descriptor has what value may previously be defined or may be varied depending on agreement.

The descriptor_length indicates a full length of the descriptor.

The application_identifier is a unique identifier for the application. The application_identifier may include organization_id and application_id. The organization_id is a unique value indicating an entity responsible for a specific application. The application_id is a value given by the above entity to the specific application, and has information identifying the application.

According to one embodiment of the present invention, the application_identifier provides information identifying the expanded service/program guide application. Also, if an application providing an additional function in respect of the service/program is required, the application_identifier may provide identification information on the corresponding application.

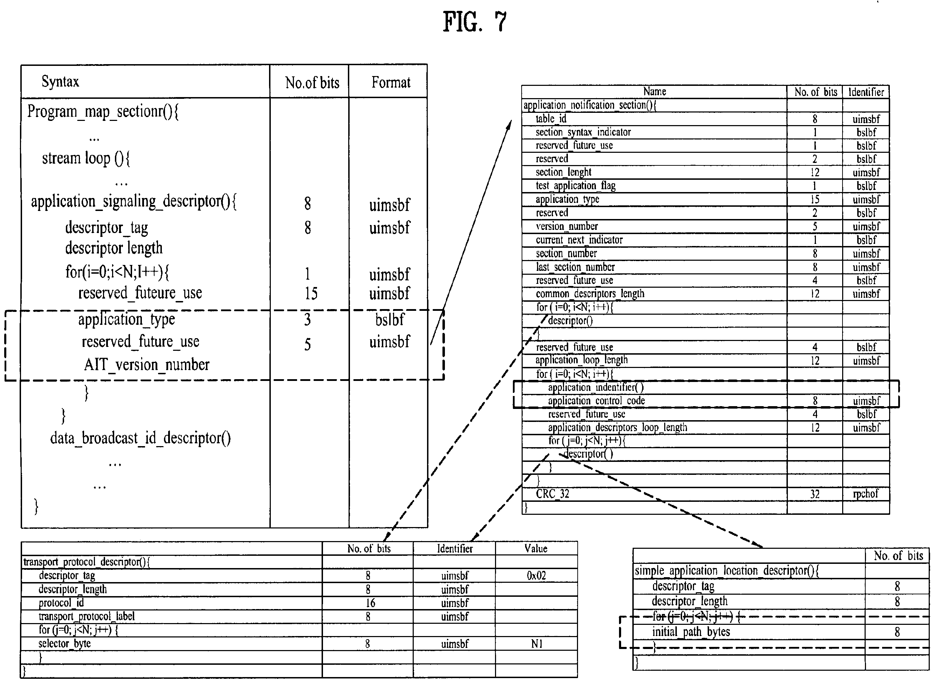

FIG. 7 is a diagram illustrating a procedure of obtaining information for allowing a receiver to receive an expanded service/program guide related to a specific service/program in accordance with one embodiment of the present invention.

The receiver receives an AIT, which includes information on applications related to a specific service/program, from the information of the PMT.

The application_identifier identifying a specific application is included in the AIT. Accordingly, the Loop having the same identification information as that of the application_identifier of the EIT_application_descriptor described in FIG. 5 has the information on the expanded service/program guide application.

Also, transport_protocol_descriptor and simple_application_location_descriptor may be included in the AIT.

The transport_protocol_descriptor identifies a transport protocol related to a service component. Accordingly, the transport_protocol_descriptor includes identification information of a protocol used to transmit an application. If the transport_protocol_descriptor is for all the applications signaled by the AIT, the transport_protocol_descriptor may be included in a region where the AIT provides common information of all the applications. If the transport_protocol_descriptor is for a specific application, it may be included in the Loop that provides information on the corresponding application.

According to one embodiment of the present invention, the simple_application_location_descriptor is included in the Loop that provides information on a specific application. The simple_application_location_descriptor provides an address of a server or path that provides a specific application. Accordingly, the server or path that provides an expanded service/program guide application may be identified through the simple_application_location_descriptor, and the receiver may receive the expanded service/program guide application. According to one embodiment of the present invention, initial_path_bytes included in the simple_application_location_descriptor includes the address of the server or path that provides the expanded service/program guide application.

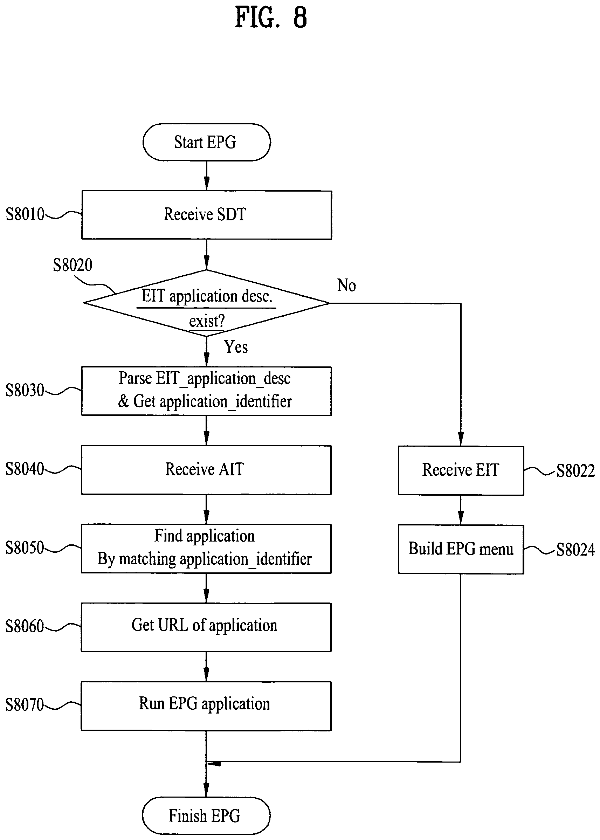

FIG. 8 is a flow chart illustrating a procedure of receiving an expanded service/program guide application related to a specific service/program in accordance with one embodiment of the present invention.

The receiver receives and parses the SDT (S8010). The receiver determines whether the EIT_application_descriptor is included in the SDT (S8020).

If the EIT_application_descriptor is not included in the SDT, the receiver receives the EIT without a separate procedure (S8022). The receiver generates a service/program guide by using schedule information related to the service/program from the EIT (S8024).

On the other hand, if the EIT_application_descriptor is included in the SDT, the receiver parses the EIT_application_descriptor and obtains the application_identifier included in the EIT_application_descriptor (S8030). According to the embodiment of the present invention, the application_identifier includes identification information on the expanded service/program guide application related to the specific service/program.

The receiver receives the AIT (S8040). The receiver discovers the application_identifier having the same value as that of the application_identifier acquired from the EIT_application_descriptor within the AIT (S8050). The receiver acquires the address of the server of path, which provides the corresponding application, form the Loop that includes the application_identifier discovered for the above step (S8060). The receiver receives the expanded service/program guide application related to the specific service/program from the above address and executes the received service/program guide application (S8070).

In receiving and processing the expanded service/program guide application, the receiver may notify the user that the expanded service/program guide application related to the specific service/program exists, and may provide information through the presence of the expanded service/program guide application so that the user equipment may use the expanded service/program guide application. For example, if the user selects the specific service/program and requests the receiver to receive the selected service/program, the receiver may additionally notify the user that the EIT_application_descriptor related to the corresponding service/program is included in the SDT if any (S8020). Afterwards, the user may perform the following procedure only if the user executes the expanded service/program guide application.

In the mean time, for anther example, the receiver may perform the procedure described in FIG. 8 and store the information on the expanded service/program guide application for the specific service/program. If the user executes the service/program guide menu to execute the service/program guide, the receiver may notify the user equipment that the expanded service/program guide related to the specific service/program exists, through the stored information.

According to the present invention, the receiver may receive information related to more services/programs than the existing service/program guide and provide the received information to the user. In this case, the user does not need to separately search for and receive the service/program guide through bidirectional network. In other words, when the user selects or desires to select a specific service/program, it is previously noted that an expanded electronic program application related to the corresponding service/program is provided. As a result, the convergence TV of broadcasting and communications may obtain optimized association of the service through bidirectional network and the service through broadcast network. Since the user does not need to receive and use a separate service through each path, the present invention is advantageous in that convenience of the user is improved in use of the convergence TV of broadcasting and communications.

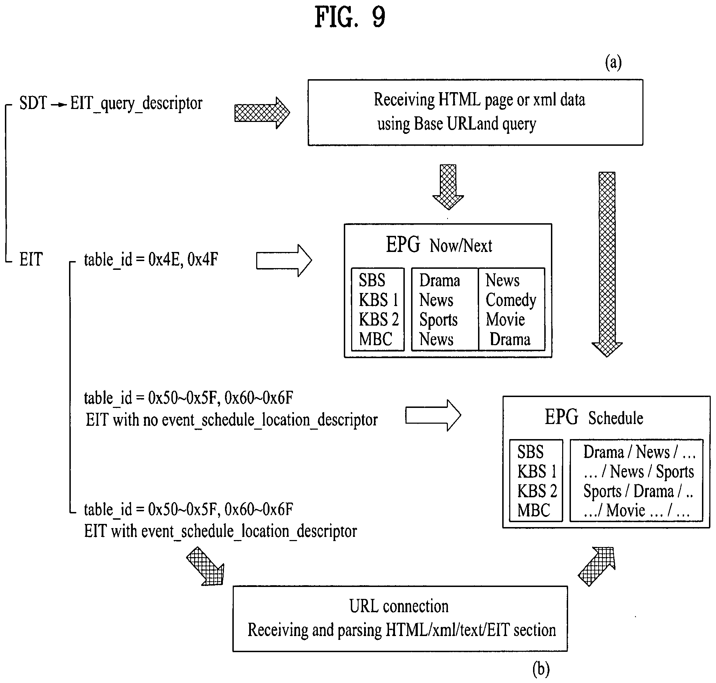

FIG. 9 is a diagram illustrating a procedure of receiving a service/program guide for a certain time period in accordance with one embodiment of the present invention.

Referring to (a) of FIG. 9, the receiver extracts the EIT_query_descriptor from the SDT. The EIT_query_descriptor includes information on an address of a server or path that provides service/program guide data related to a specific service/program. According to one embodiment of the present invention, this address is provided in a format of URL. The receiver adds query information, which includes information indicating a certain time period, to the URL address, so as to generate URL address that includes the query information. The receiver may receive the service/program guide data for the time period indicated by the query information through the URL that additionally includes the query information. For example, the receiver may receive a time period desired by the user to receive the service/program guide, through a user interface. In this case, the address of the server, which provides the service/program guide of the specific service/program, is http://www.epgdb.com/mbc/epg.cgi, and if the user or the receiver desires to receive the service/program guide for the service/program from 11:30, a.m. to 13:00, a.m. on November 7, 2009, corresponding query information is generated. A format previously defined in the corresponding field may be used as the generated query information. For example, URL that includes the generated query information may be http://www.epgdb.com/mbc/epg.cgi?date=20091107&stime=113000&e time=130000.

At this time, the service/program guide received by the receiver may be transferred in a format of HTML, XML, text or EIT section.

Referring to (b) of FIG. 9, the receiver receives the EIT. If table_id of the EIT is 0x4E or 0x4F, the EIT includes current or next event information. If table_id of the EIT is 0x50 to 0x5F, or 0x60 to 0x6F, the EIT includes event schedule information on the service/program.

The receiver extracts the event_schedule_location_descriptor included in the EIT. The event_schedule_location_descriptor includes an address of a server that provides additional broadcast schedule information on a specific service/program. The receiver receives the additional broadcast schedule information related to the specific service/program through the address included in the event_schedule_location_descriptor.

The event information and the event schedule information transmitted through the EIT may include information related to a service/program for one day. Accordingly, the user may previously know event information and event schedule information after today. For example, kinds of products sold in a shopping channel per hour may be varied. If the EIT of the related art is used, only information on products sold for one day may be acquired. However, according to the present invention, the user may identify products, which were sold before, and products which will be sold next week.

The additional broadcast schedule information received by the receiver may be transferred in a format of HTML, XML, text, or EIT section. In case of the HTML format, font, color and size of text may be designated, and additional data such as image may be received through additional link, whereby a certain type of service/program guide service may be provided regardless of various options of the receiver. Also, in case of the XML format, it is advantageous in that more information may be transferred and each kind of information may be transmitted and manipulated depending on items. The EIT section format is advantageous in that it may be processed through a broadcast signal processing procedure of the TV without additional procedure. In this way, as the receiver receives the service/program guide related to the service/program through bidirectional network, it may provide the user with the service/program guide that included various and detained kinds of information.

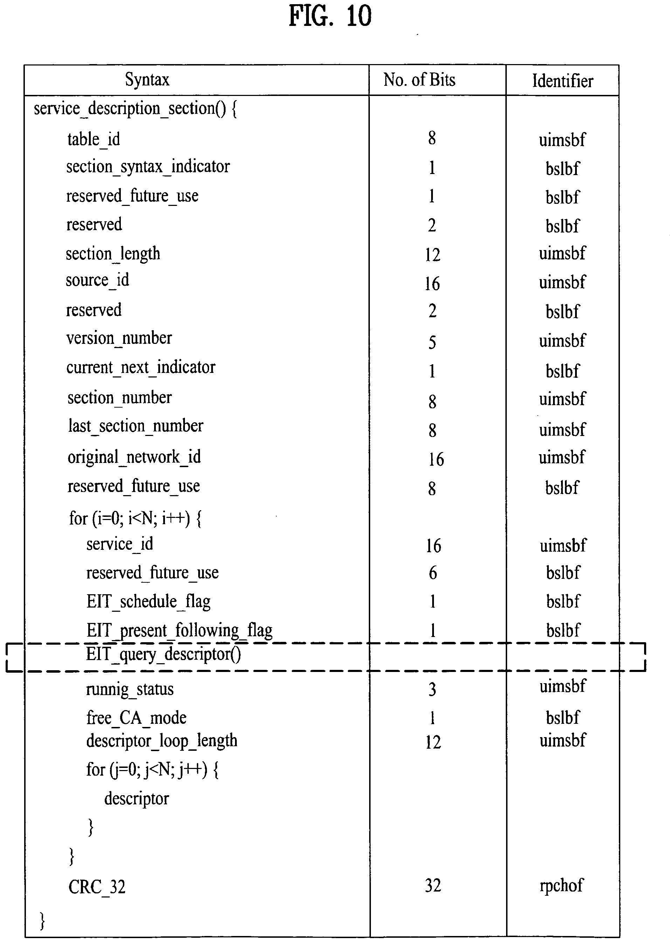

FIG. 10 is a diagram illustrating detailed syntax of SDT according to one embodiment of the present invention.

The SDT according to one embodiment of the present invention includes EIT_query_descriptor. The EIT_query_descriptor includes address information on a server or path that may receive a service/program guide provided on Internet.

The description of the other fields included in the SDT will be replaced with the description of FIG. 5.

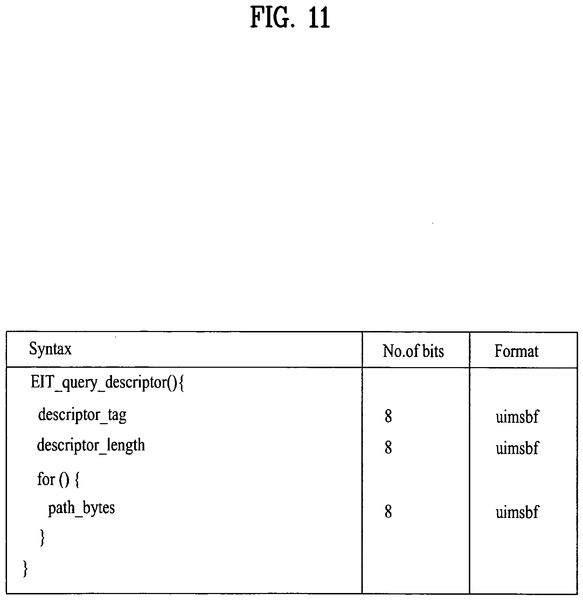

FIG. 11 is a diagram illustrating detailed syntax of EIT_query_descriptor added to SDT according to one embodiment of the present invention.

The EIT_query_descriptor includes descriptor_tag, descriptor length and path bytes.

The descriptor_tag indicates a unique value of the descriptor, wherein the value indicates what the descriptor is. Whether what descriptor has what value may previously be defined or may be varied depending on agreement.

The descriptor_length indicates a full length of the descriptor.

The path bytes provides address information of a server or path that provides service/program guide data provided on Internet. According to one embodiment of the present invention, the above address has a format of URL, and has a value of US-ASCII character set.

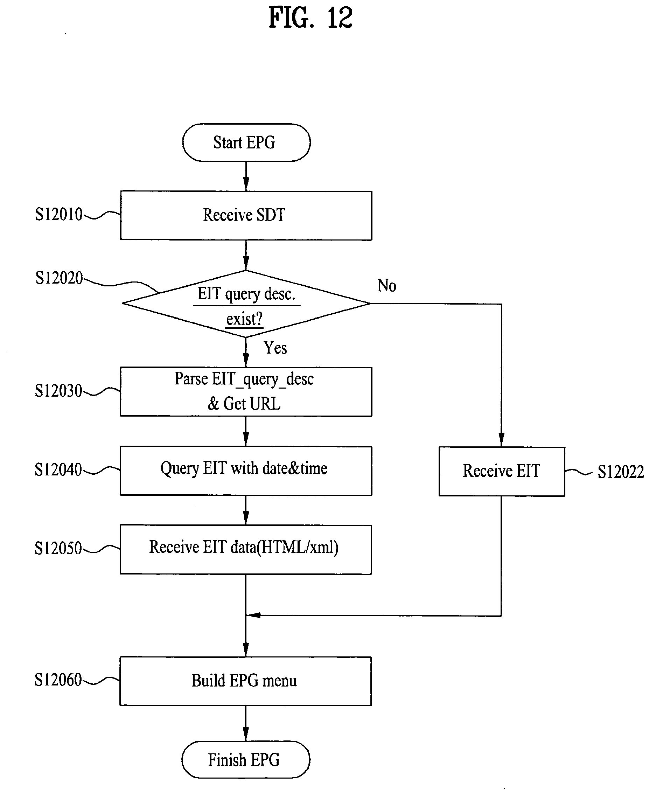

FIG. 12 is a flow chart illustrating a method for receiving service/program guide data for a certain time period related to a specific service/program in accordance with one embodiment of the present invention.

The receiver receives the SDT (S12010). The receiver determines whether the EIT_query_descriptor is included in the received SDT (S12020).

If the EIT_query_descriptor is not included in the SDT, the receiver receives the EIT from the existing information of the SDT (S12022).

If the EIT_query_descriptor is included in the SDT, the receiver parses the EIT_query_descriptor and obtains an address of a server or path that provides a service/program guide included in the EIT_query_descriptor (S12030). The receiver generates information querying service/program guide data for a certain time period and adds the generated information to the above address (S12040). The receiver receives the service/program guide data from the address that additionally includes the query information (S12050). The receiver the service/program guide by using the received service/program guide data (S12060).

According to one embodiment of the present invention, the received service/program guide data have a format of HTML, XML, EIT section, etc.

The user may receive and use the service/program guide for a desired time period through the aforementioned steps.

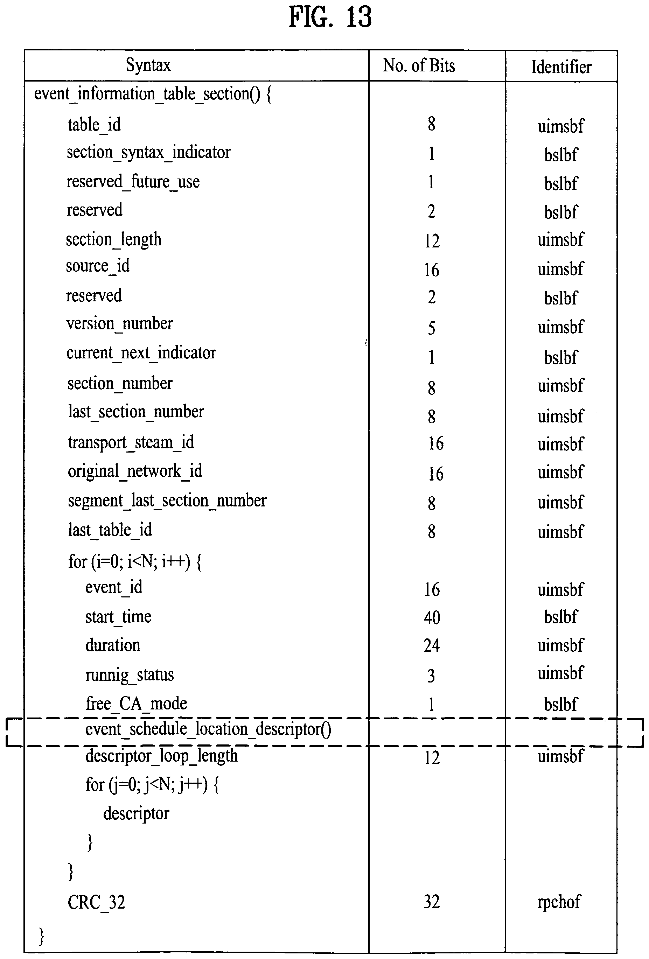

FIG. 13 is a diagram illustrating detailed syntax of EIT according to one embodiment of the present invention.

The EIT according to the present invention includes event_id, start_time, duration, running_status and event_schedule_location_descriptor.

The event_id provides information identifying an event.

The start_time provides information on time when the event starts.

The duration provides information on time when the event is maintained.

The event_schedule_location_descriptor provides inforatmion on a server or path that may receive event schedule information provided on Internet.

The other fields may be replaced with the description of the fields described in FIG. 5.

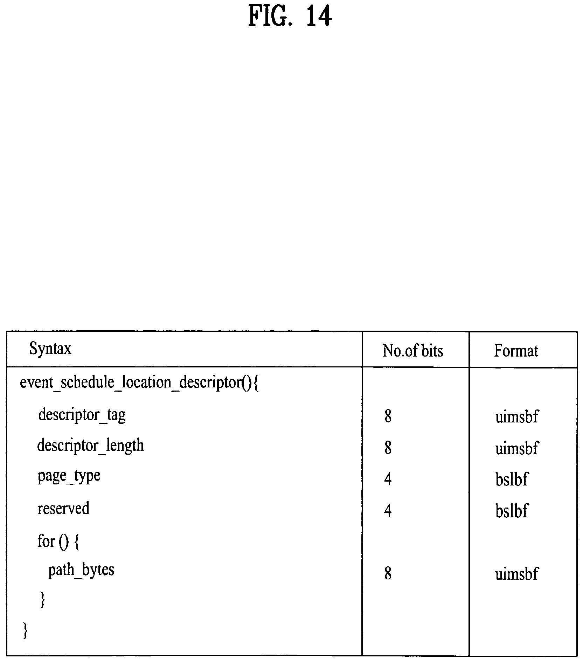

FIG. 14 is a diagram illustrating detailed syntax of event_schedule_location_descriptor included in the EIT according to one embodiment of the present invention.

The event_schedule_location_descriptor according to the present invention includes descriptor_tag, descriptor_length, page_type and path_bytes.

The descriptor_tag indicates a unique value of the descriptor, wherein the value indicates what the descriptor is. Whether what descriptor has what value may previously be defined or may be varied depending on agreement.

The descriptor_length indicates a full length of the descriptor.

The page_type indicates a format of the event schedule information provided on Internet. For example, if the value of page_type is set to 0, the event schedule information of HTML format is transmitted. If the value of page_type is set to 1, the event schedule information of XML format is transmitted. If the value of page_type is set to 2, the event schedule information of text format is transmitted. If the value of page_type is set to 3, the event schedule information of EIT section format is transmitted.

The path_bytes provides address information of a server or path that provides the event schedule information provided on Internet. According to one embodiment of the present invention, the above address has a format of URL, and has a value of US-ASCII character set.

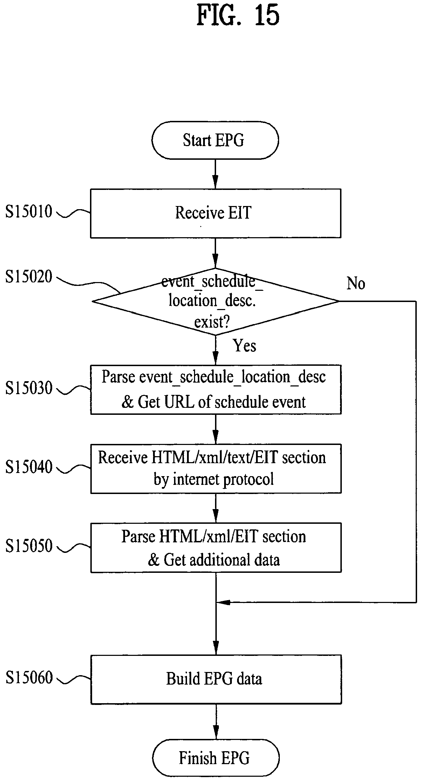

FIG. 15 is a flow chart illustrating a method for receiving scheduling information an event related to a specific service/program in accordance with one embodiment of the present invention.

The receiver receives the EIT (S15010). The receiver determines whether event_schedule_location_descriptor is included in the EIT (S15020). If the event_schedule_location_descriptor is not included in the EIT, the receiver generates a service/program guide using information within the EIT.

If the event_schedule_location_descriptor is included in the ETI, the receiver acquires an address of a server or path, which provides schedule information of an event related to a specific service/program on Internet by parsing the event_schedule_location_descriptor (S15030).

The receiver receives event schedule information from the above address (S15040). At this time, according to the embodiment of the present invention, the received event schedule information has a format of HTML, XML, text or EIT section.

The receiver acquires additional service/program guide data for a specific service/program through the received event schedule information (S15050). The receiver generates a service/program guide by using the acquired service/program guide data (S15060).

The event information and event schedule information transmitted through the EIT may include information related to a service/program for one day. Accordingly, in this way, the user may previously know event information and event schedule information after today, unlike the related art that the user may not previously know event information and event schedule information after today.

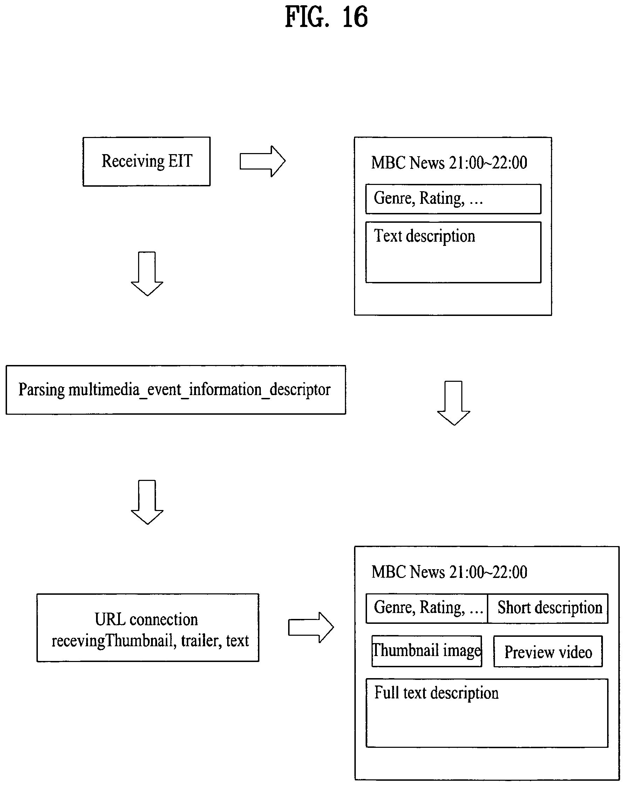

FIG. 16 is a diagram illustrating a procedure of receiving a multimedia service/program guide in accordance with one embodiment of the present invention.

Referring to FIG. 16, the receiver receives the EIT. The EIT includes additional information related to a service/program.

According to the present invention, multimedia_event_information_descriptor is inserted into the EIT. The multimedia_event_information_descriptor includes address information of a server or path that provides image, moving picture, text files, etc. related to the service/program guide data provided by the EIT.

The receiver pares an address of a server or path, which provides data required for the multimedia service/program guide from the multimedia_event_information_descriptor, and receives the above data from the corresponding address.

The receiver generates a multimedia service/program guide by decoding the received data. In this case, if the receiver recognizes that the multimedia_event_information_descriptor is included in the EIT, it may notify the user that the corresponding program may use the multimedia service/program guide. Also, since a user interface (UI) may be varied per TV, the receiver may receive data for the multimedia service/program guide and edit the received data to match with its system UI. For example, the receiver may modify size and format of resolution, video or image.

Alternatively, the receiver may insert address information extracted from the multimedia_event_informatoin_descriptor into the service/program guide without previously receiving data for forming the multimedia service/program guide, whereby it may download image, moving picture or text related to the service/program and provide the downloaded data to the user only if the user desires to view the corresponding information.

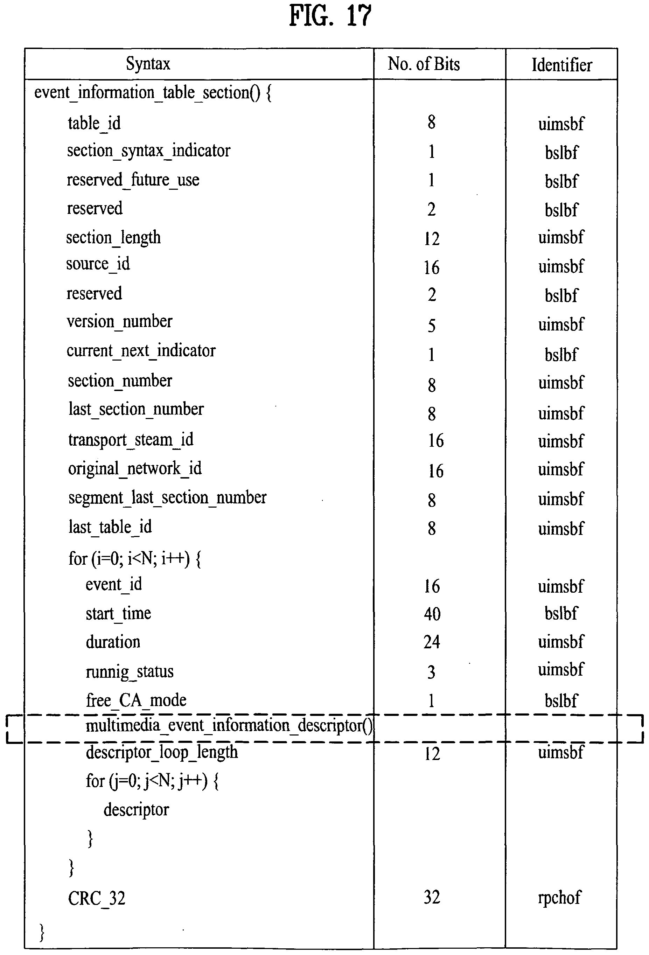

FIG. 17 is a diagram illustrating detailed syntax of EIT according to one embodiment of the present invention.

The EIT according to one embodiment of the present invention includes the multimedia_event_information_descriptor. According to one embodiment of the present invention, the multimedia_event_information_descriptor is included in Loop related to a specific event to provide an address of a server or path on Internet, which provides additional information related to the corresponding event.

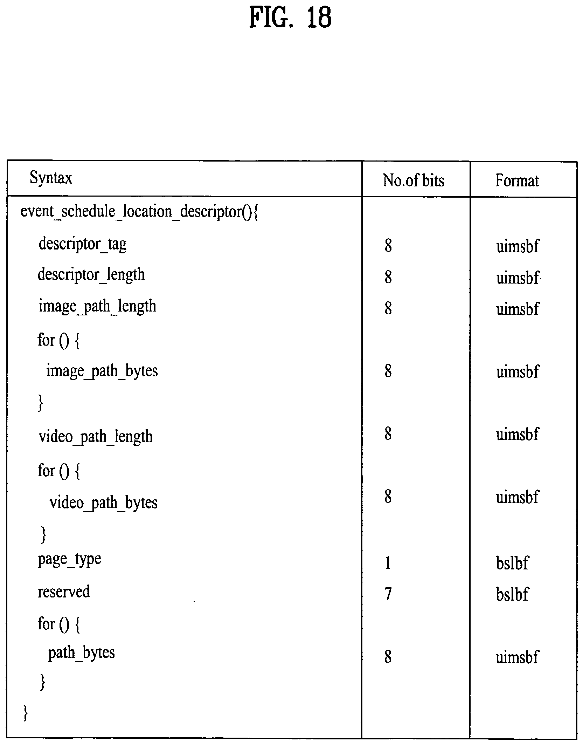

FIG. 18 is a diagram illustrating detailed syntax of multimedia_event_information_descriptor according to one embodiment of the present invention.

The multimedia_event_information_descriptor according to one embodiment of the present invention includes descriptor_tag, descriptor_length, image_path_length, image_path_bytes, video_path_length, video_path_bytes, page_type and text_path_bytes.

The descriptor_tag indicates a unique value of the descriptor, wherein the value indicates what the descriptor is. Whether what descriptor has what value may previously be defined or may be varied depending on agreement.

The descriptor_length indicates a full length of the descriptor.

The image_path_length provides information on a length of an address of a server or path that provides thumbnail image.

The image_path_bytes provides information on an address of a server or path that provides thumbnail. For example, if the address has a format of URL, the image_path_bytes indicates URL address through US-ASCII character set value.

The video_path_length provides information on a length of an address of a server or path that provides moving picture.

The video_path_bytes provides information on an address of a server or path that provides moving picture. For example, if the address has a format of URL, the video_path_bytes indicates the URL address through US-ASCII character set value.

The page_type provides information on a format of text provided on Internet. For example, if a value of the page_type is set to 0, the text may be transferred in the format of HTML. If the value of page_type is set to 1, the text may be transferred in the format of XML.

The text_path_bytes provides information on an address of a server or path that provides test. For example, if the address has a format of URL, the text_path_bytes indicates the URL address through US-ASCII character set value.

According to this embodiment, when the multimedia service/program guide is provided to the user, a desired type of multimedia service program guide may be provided to the user. For example, if the user desires to view a service/program guide related to a specific service/program and view guide image only of the corresponding service/program, the receiver may receive image only and include the received image in the multimedia service/program guide. Also, if the user desires to view only a preview moving picture of the corresponding service/program or story or guide of the corresponding service/program, the receiver may generate the multimedia service/program guide by receiving the corresponding information only.

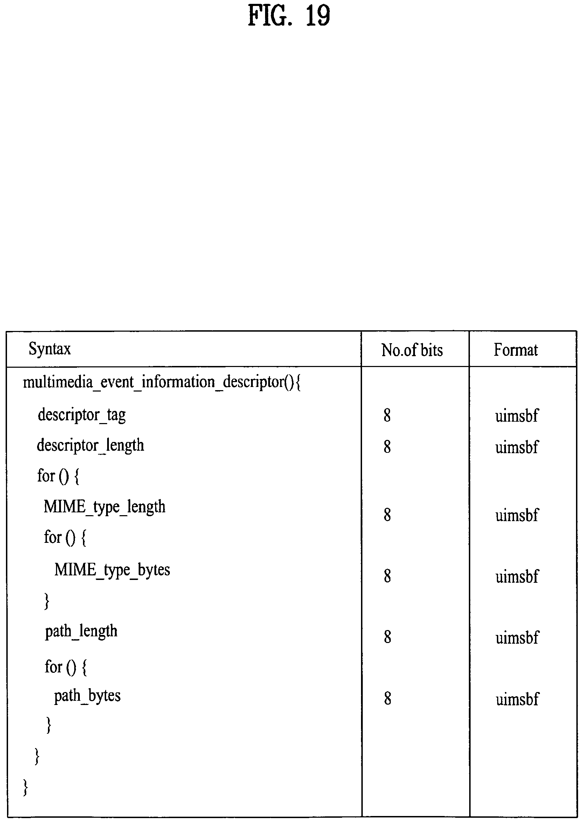

FIG. 19 is a diagram illustrating detailed syntax of multimedia_event_information_descriptor according to another embodiment of the present invention.

The multimedia_event_information_descriptor according to another embodiment of the present invention includes descriptor_tag, descriptor_length, MIME_type_length, MIME_type_bytes, path_length and path_bytes.

The descriptor_tag indicates a unique value of the descriptor, wherein the value indicates what the descriptor is. Whether what descriptor has what value may previously be defined or may be varied depending on agreement.

The descriptor_length indicates a full length of the descriptor.

The MIME_type_length indicates a length of text column of MIME (Multipurpose Internet Mail Extensions) format.

The MIME_type_bytes indicates a text column of MIME format.

The path_length provides information on a length of a server or path that provides data for a multimedia service/program guide.

The path_bytes provides information on an address of a server or path that provides data for a multimeidia service/program guide. For example, if the address has a format of URL, URL may be indicated by US-ASCII character set value.

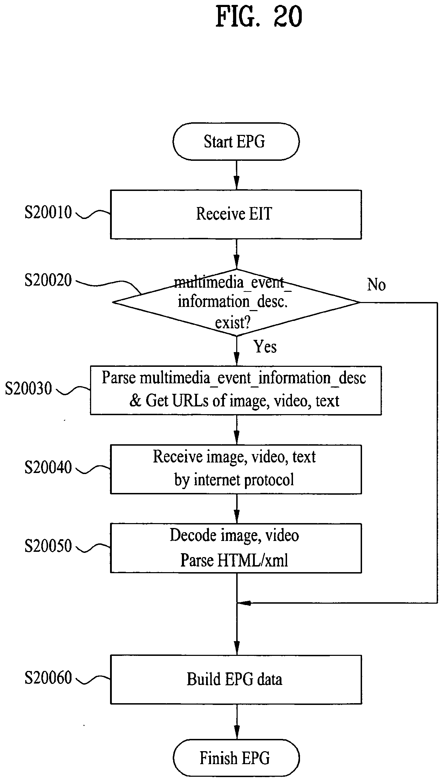

FIG. 20 is a flow chart illustrating a method for providing a multimedia service/program guide in accordance with one embodiment of the present invention.

As shown in FIG. 20, the receiver receives the EIT (S20010). The receiver determines whether the multimedia_event_information_descriptor is included in the EIT (S20020). If the multimedia_event_information_descriptor is not included in the EIT, the receiver may form the service/program guide by using only the information of the EIT and provide the formed service/program guide to the user.

If the multimedia_event_information_descriptor is included in the EIT, the receiver extracts an address of a server or path on Internet, which provides moving picture, image and text data for forming a multimedia service/program guide by parsing the multimedia_event_informatoin_descriptor (S20030).

The receiver receives moving picture, image and text data related to the service/program for generating the multimedia service/program guide from the above address (S20040).

The receiver decodes image data related to the moving picture and parses the text transmitted in the format of HTML or XML ((S20050), and generates the multimedia service/program guide by using these data (S20060).

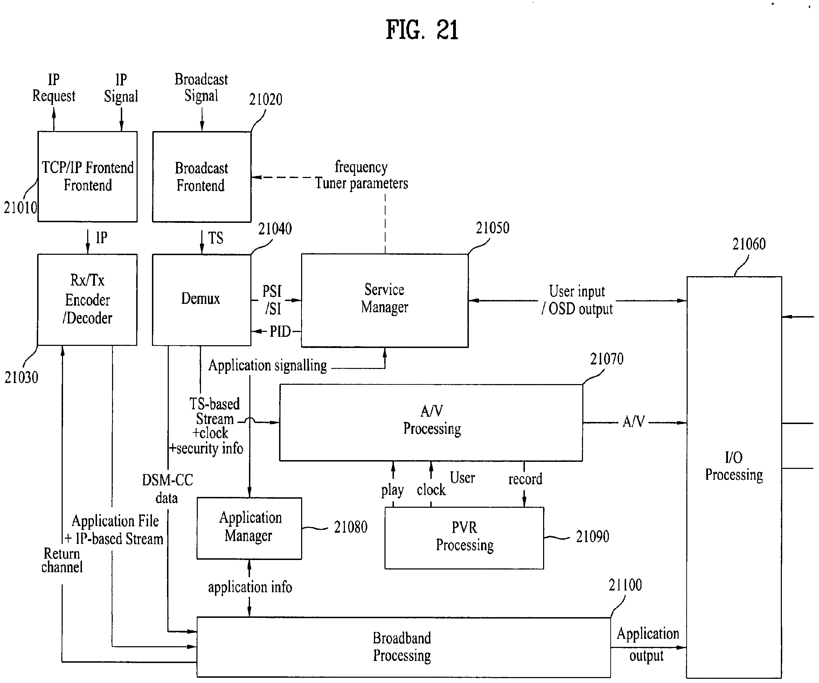

FIG. 21 is a diagram illustrating a functional block of a receiver according to one embodiment of the present invention.

As shown in FIG. 21, the receiver includes a network front end 21010, a broadcast front end 21020, an IP signal processing unit 21030, a demodulator 21040, a service manager 2050, an input and output processor 21060, an audio/video processor 21070, an application manager 21080, a personal video recorder (PVR) processor 21090, and a broadband processor 21100.

The network front end 21010 receives the IP signal requested from the broadband processor 21100 or transmits response/request information of the receiver to a specific IP address.

The broadcast front end 21020 receives a broadcast signal in accordance with frequency and tuning parameter set by the service manager 21050, decodes the transmitted signals in accordance with a format and outputs a transport stream.

The IP signal processing unit 21030 decodes the IP signal and transfers the decoded signal to the broadband processor 21100 or encodes the request/response of the receiver data to transmit the request/response data through the IP network.

The demodulator 21040 performs demodulation for the broadcast signal in accordance with a modulation format of the broadcast signal received by the broadcast front end 21020.

The service manager 21050 serves to control the system of a full service provided by the service provider. The service manager 21050 controls a full service in accordance with a service list and access information on the basis of PSI/SI. Also, the service manager 21050 manages tuner control information such as frequency and guard interval transmitted through the PSI/SI, and receives user input related to the service/program guide and channel and performs a service processing work based on the received user input.

The input and output processor 21060 processes the user input and audio/video output. The input and output processor 21060 transfers the user input to the service manager 21050 and controls the service/program guide and on screen display (OSD). Also, the input and output processor 21060 performs various kinds of controls to output audio and video to the user.

The audio/video processor 21070 decodes audio/video streams and performs descrambling for the audio/video signals. Also, the audio/video processor 21070 synchronizes data and then outputs the synchronized data to the input and output processor 21060.

The application manager 21080 takes data from the related IP address, selects an application loaded/executed by the broadband processor 21100, and manages a life cycle of the application in accordance with application signaling information transferred from the service manager 21050.

The PVR processor 21090 performs an overall function related to the PVR. For example, the PVR processor 21090 performs control related to storage and play of service streams. If the PVR processor 21090 records the service streams, it stores information such as timestamp and random access point in the audio/video streams. If the PVR processor 21090 plays the service streams, it transfers the timestamp and random access point information to the audio/video decoder.

The broadband processor 21100 decodes a packet transmitted through a TCP/IP protocol in accordance with an encoded protocol. Also, the broadband processor 21100 processes contents depending on its format and transfers the processed contents to the input and output processor 21060.

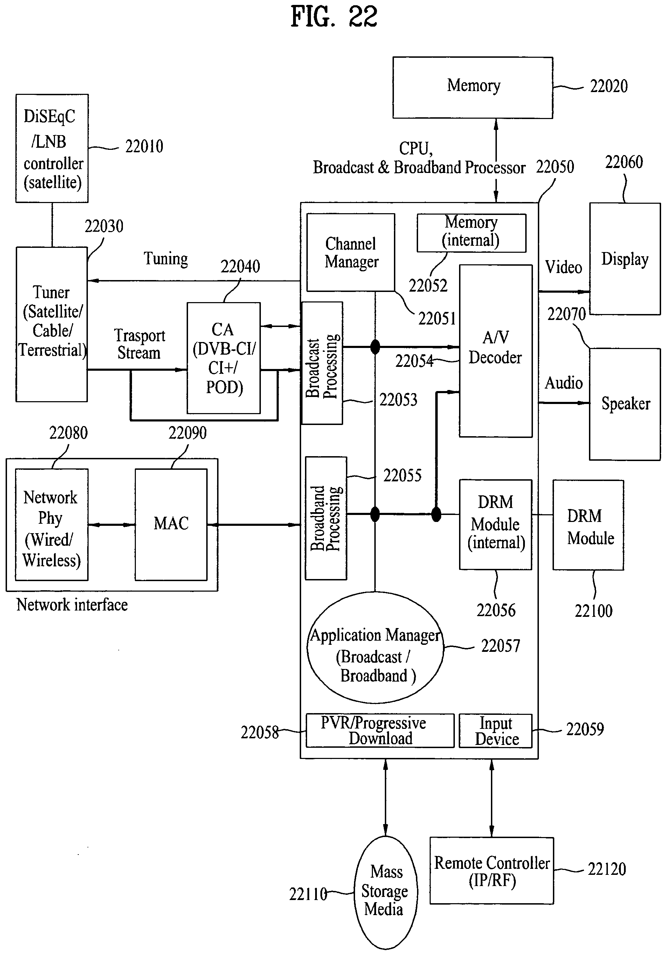

FIG. 22 is a diagram illustrating a device block of a receiver according to one embodiment of the present invention.

As shown in FIG. 22, the receiver a Digital Satellite Equipment Control/ Low Noise Block Controller (DiSEqC/LNB controller) 22010, a memory 22020, a tuner 22030, a conditional access processor 22040, a central processor (broadcast/broadband processor) 22050, a display module (22060), a speaker 22070, a network module 22080, a media access controller (MAC) 22090, a Digital Right Management (DRM) module 22100, a mass storage media 22110 and a remote controller 22120.

The DiSEqC/LNB controller 22010 sets and controls receiving frequency and parameter of an antenna for receiving satellite broadcasting from a satellite broadcast receiver.

The memory 22020 stores an initial booting code (for example, ROM), is used as a main memory (for example, RAM) for storing information for various kinds of operations of the receiver, and stores non-volatile information required when the receiver is operated (for example, NVRAM).

The tuner 22030 receives the broadcast signal in accordance with a previously set frequency and tuning parameter. The tuner receives a signal transmitted through a broadcast network. The received signal may include information for signaling or various kinds of additional information in addition to a service/program signal. For example, an event information table and an application information table may be included in the additional information.

The conditional access processor 22040 descrambles the scrambled service streams in accordance with a previously set authorigy, or processes the service streams in accordance with a previously set condition as information that may be used by the user.

The central processor 22050 may correspond to a main chip set of a digital TV.

The central processor serves to process a signal received through a broadcast network or bidirectional network and transfer the processed signal to each part of the receiver as information. Also, the central processor serves to control each part of the receiver.

The central processor 22050 includes a channel manager 22051, an internal memory 22052, a broadcast processor 22053, an audio/video decoder 22054, a broadband processor 22055, an internal DRM module 22056, an application manager 22057, a PVR/progressive download module 22058, and an input device 22059.

The channel manager 22051 stores and loads channel information and controls peripheral modules.

The internal memory 22052 is a small-scaled memory for debugging and system management.

The broadcast processor 22053 is a module to which broadcast streams are input, and its detailed functions are the same as those of the broadcast processor shown in FIG. 21.

The audio/video decoder 22054 decodes audio/video packets and transmits the decoded audio/video packets to the output module.

The broadband processor 22055 is a module to which Internet packets are input.

The internal DRM module 22056 decodes copyright information of the input streams in accordance with authentication information.

The application manger 22057 manages data/Internet service applications.

The PVR/progressive download module 22058 serves to control large-scaled external module. For example, the PVR/progressive download module 22058 is involved in time shift, recording and input and output process of downloaded contents.

The input device 22059 processes an input signal of an external module, for example, remote controller 22120. A command signal for allowing the user to control the receiver is transferred to the central processor 22050 through the input device 22059.

The display module 22060 outputs video information.

The speaker 22070 outputs audio information.

The network module 22080 serves as an interface for accessing an Internet network.

The media access controller 22090 receives the signal transmitted to the Internet network, and manages Internet network access.

The DRM module 22100 decodes copyright information of the input streams in accordance with use authentication information on service, application and contents.

The mass storage media 22110 may be provided as HDD. The mass storage media 22110 may be a space for PVR function and storing media files of large capacity.

The remote controller 22120 receives the user input and transfers the control signal to the receiver.

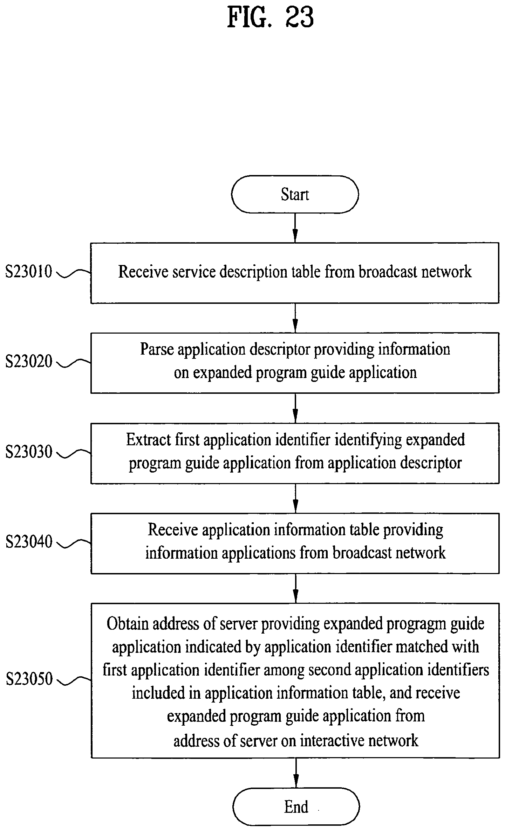

FIG. 23 is a flow chart illustrating a method for receiving an expanded service/program guide in accordance with one embodiment of the present invention.

As shown in FIG. 23, the receiver a service description table through the broadcast network (S23010). According to one embodiment of the present invention, the service description table includes an application descriptor that provides information on expanded service/program guide application.

The receiver parses the application descriptor from the service description table (S23020). The receiver extracts a first application identifier, which identifies the expanded program guide application from the descriptor, from the application descriptor (S23030). The receiver receives an application information table that provides information of applications related to a specific service from the broadcast network (S23040). The receiver obtains an address of a server, which provides the expanded program guide application indicated by an application identifier matched with the first application identifier among second application identifiers included in the application information table, and receives the expanded program guide application from the address of the server on interactive network (S23050).

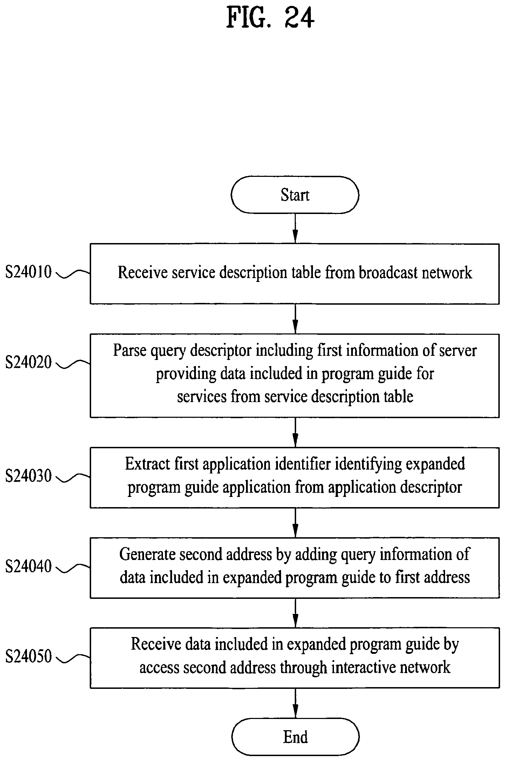

FIG. 24 is a flow chart illustrating a method for receiving a service/program guide in accordance with another embodiment of the present invention.

As shown in FIG. 24, the receiver receives a service description table, which includes information on services, from the broadcast network (S24010). The receiver parses a query descriptor, which includes a first address of a server providing data included in the program guide for the services, from the received service description table (S24020). The receiver extracts the first address of the server from the query descriptor (S24030). The receiver generates a second address by adding the query information of data included in the expanded program guide to the first address (S24040). The receiver receives data included in the expanded program guide by accessing the server indicated by the second address through the interactive network (S24050).

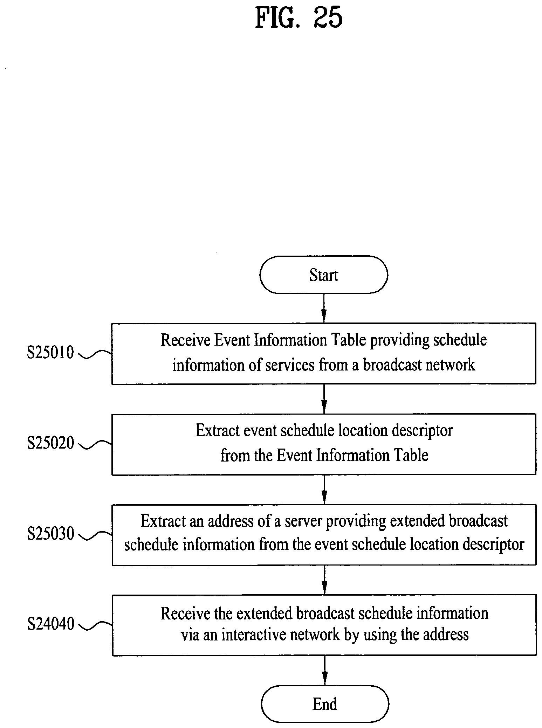

FIG. 25 is a flow chart illustrating a method for receiving a service/program guide in accordance with other embodiment of the present invention.

As shown in FIG. 25, the receiver receives an event information table that provides schedule information of services from the broadcast network (S25010). The receiver extracts an event schedule location descriptor from the event information table (S25020). The receiver extracts an address of a server that provides expanded broadcast schedule information from the extracted event schedule location descriptor (S25030). The receiver receives the expanded broadcast schedule information through the interactive network by using the address (S25040).

### MODE FOR CARRYING OUT THE INVENTION

As described above, related matters have been described in the best mode for carrying out the present invention.

### INDUSTRIAL APPLICABILITY

As described above, the present invention may be applied to a multimedia device such as a convergence TV of broadcasting and communications.

## Claims

1. An apparatus for receiving an expanded program guide, the apparatus comprising:
means (21020) for receiving a specific broadcast service and a service description table including information on the specific broadcast service from a broadcast network;
means (21050) for parsing an event information table, EIT, query descriptor from the service description table, the EIT query descriptor including a first address for a server providing program guide data related to the specific broadcast service;
extracting the first address for the server from the EIT query descriptor;
generating a second address by adding query information to the first address, the query information being generated from date and time information inputted by a user, the date and time information indicating a time period for which the user desires to access an electronic program guide, EPG, the EPG for the time period being related to the specific broadcast service,
wherein the first address and the second address are in a format of a URL;
means (21060) for receiving the date and time information from the user; and
means (21010) for receiving program guide data corresponding to the EPG for the time period by accessing the second address through an interactive network.

2. The apparatus of claim 1, wherein the received program guide data is in HTML or XML format.

3. The apparatus of claim 1 or 2, wherein the means (21060) for receiving the date and time information from the user further displays the EPG for the time period desired by the user.

## Patentansprüche

1. Vorrichtung zum Empfangen eines erweiterten Programmführers, wobei die Vorrichtung umfasst:
eine Einrichtung (21020) zum Empfangen eines bestimmten Rundfunkdienstes und einer Dienstbeschreibungstabelle mit Information über den bestimmten Rundfunkdienst von einem Rundfunknetzwerk;
eine Einrichtung (21050) zum Parsen eines Ereignisinformationstabelle-, EIT, Abfragedeskriptors aus der Dienstbeschreibungstabelle, wobei der EIT-Abfragedeskriptor eine erste Adresse für einen Server enthält, der Programmführerdaten in Bezug auf den bestimmten Rundfunkdienst bereitstellt;
Extrahieren der ersten Adresse für den Server aus dem EIT-Abfragedeskriptor;
Erzeugen einer zweiten Adresse durch Hinzufügen von Abfrageinformation zu der ersten Adresse, wobei die Abfrageinformation aus Datums- und Uhrzeitinformation erzeugt wird, die von einem Benutzer eingegeben wird, wobei die Datums- und Uhrzeitinformation einen Zeitraum angibt, für den der Benutzer auf einen elektronischen Programmführer, EPG, zugreifen möchte, wobei sich der EPG für den Zeitraum auf den bestimmten Rundfunkdienst bezieht,
wobei die erste Adresse und die zweite Adresse in einem Format einer URL vorliegen;
eine Einrichtung (21060) zum Empfangen der Datums- und Uhrzeitinformation von dem Benutzer; und
eine Einrichtung (21010) zum Empfangen von dem EPG entsprechenden Programmführerdaten für den Zeitraum durch Zugriff auf die zweite Adresse über ein interaktives Netzwerk.

2. Vorrichtung nach Anspruch 1, wobei die empfangenen Programmführerdaten in einem HTML- oder XML-Format vorliegen.

3. Vorrichtung nach Anspruch 1 oder 2, wobei die Einrichtung (21060) zum Empfangen der Datums- und Uhrzeitinformation von dem Benutzer ferner den EPG für den von dem Benutzer gewünschten Zeitraum anzeigt.

## Revendications

1. Appareil destiné à recevoir un guide de programmes étendu, l'appareil comprenant :
un moyen (21020) destiné à recevoir un service de diffusion spécifique et une table de description de service incluant des informations sur le service de diffusion spécifique depuis un réseau de diffusion ;
un moyen (21050) destiné à analyser un descripteur d'interrogation de table d'informations d'événement à partir de la table de description de service, le descripteur d'interrogation EIT comprenant une première adresse pour un serveur fournissant des données de guide de programme se rapportant au service de diffusion spécifique ;
l'extraction de la première adresse pour le serveur à partir du descripteur d'interrogation EIT ;
la génération d'une deuxième adresse en ajoutant des informations d'interrogation à la première adresse, les informations d'interrogation étant générées à partir des informations de date et d'heure délivrées en entrée par un utilisateur, les informations de date et d'heure indiquant une période de temps pendant laquelle l'utilisateur souhaite accéder à un guide de programme électronique, EPG, l'EPG pour la période de temps se rapportant au service de diffusion spécifique,
dans lequel la première adresse et la deuxième adresse sont dans un format URL ;
un moyen (21060) destiné à recevoir les informations de date et d'heure de l'utilisateur ; et
un moyen (21010) destiné à recevoir des données de guide de programme correspondant à l'EPG pour la période de temps en accédant à la deuxième adresse par l'intermédiaire d'un réseau interactif.

2. Appareil selon la revendication 1, dans lequel les données de guide de programme reçues sont dans un format HTML ou XML.

3. Appareil selon la revendication 1 ou 2, dans lequel le moyen (21060) destiné à recevoir les informations de date et d'heure de l'utilisateur affiche en outre l'EPG pour la période de temps souhaitée par l'utilisateur.
